# EUROPÄISCHE PATENTSCHRIFT

(11) **EP 3 710 153 B1**
(45) Veröffentlichungstag und Bekanntmachung des Hinweises auf die Patenterteilung: **08.09.2021**
(21) Anmeldenummer: 18803961.4
(22) Anmeldetag: 15.11.2018
(51) Int. Cl.: B01J 19/08, C01B 3/48

(54) **VERFAHREN UND VORRICHTUNG ZUR PLASMAINDUZIERTEN WASSERSPALTUNG**
METHOD AND DEVICE FOR PLASMA-INDUCED WATER SPLITTING
PROCÉDÉ ET DISPOSITIF DE DISSOCIATION DE L'EAU INDUITE PAR PLASMA

(30) Priorität: 15.11.2017 DE 102017126886
(43) Veröffentlichungstag der Anmeldung: 23.09.2020
(73) Patentinhaber: Graforce GmbH, 12489 Berlin (DE)
(72) Erfinder: HANKE, Jens, 12489 Berlin (DE); KNIST, Sascha, 12489 Berlin (DE)
(74) Vertreter: Eisenführ Speiser
(86) Internationale Anmeldenummer: PCT/EP2018/081321
(87) Internationale Veröffentlichungsnummer: WO 2019/096880

(56) Entgegenhaltungen:
- US-A1- 2009 109 141
- US-A1- 2016 327 310
- JIAN LUO ET AL: "Water splitting in low-temperature ac plasmas at atmospheric pressure", RESEARCH ON CHEMICAL INTERMEDIATES : AN INTERNAT. JOURNAL, Bd. 26, Nr. 9, 1. Januar 2000 (2000-01-01) , Seiten 849-874, XP055555464, NL ISSN: 0922-6168, DOI: 10.1163/156856700X00354

## Beschreibung

Die Erfindung betrifft ein Verfahren sowie eine Vorrichtung zur plasmainduzierten Wasserspaltung.

Wasserstoff gewinnt als Energieträger zunehmend an Bedeutung, insbesondere im Zusammenhang mit dem angestrebten Übergang zur Nutzung regenerativer Energiequellen. So kann beispielsweise bei Windenergieanlagen über nachgeschaltete Prozesse speicherfähiger Wasserstoff erzeugt werden, was die schwankende Energieerzeugung auf Grund von Fluktuationen der Windstärke und des Strombedarfs zumindest teilweise kompensiert. Von entscheidender Bedeutung ist dabei die energetische Effizienz des Gesamtprozesses, welche letztlich über die Praxistauglichkeit entscheidet. Ein Vorteil einer Nutzung von Wasserstoff als Energieträger besteht darin, dass bei seiner Verbrennung keine klimaschädlichen Verbindungen entstehen.

Zur Gewinnung von Wasserstoff sind verschiedene Verfahren bekannt. Bei der Wasserspaltung dient Wasser als Wasserstofflieferant. Neben unterschiedlichen Reforming-Prozessen ist vor allem die Bildung von Wasserstoff aus Wasser durch Elektrolyse, Thermolyse oder Photoelektrolyse von Bedeutung.

Mit Hilfe von elektrischem Strom werden in einem Elektrolyseur aus dem Wasser der Energieträger Wasserstoff und Sauerstoff erzeugt. Bei verschiedenen chemischen Verfahren, bei denen die Elektrolyse für die Erzeugung anderer Verbindungen eingesetzt wird, kann Wasserstoff als Nebenprodukt anfallen.
Bei thermochemischen Verfahren zur Spaltung von Wasser in Wasserstoff sind sehr hohe Temperaturen notwendig, die zum Beispiel durch Konzentrierung der Sonnenstrahlung möglich sind. Auch biologische Verfahren sind in der Entwicklung, bei denen die während der Photosynthese stattfindende Wasserspaltung zur Erzeugung von Wasserstoff genutzt werden kann. Direkte Verwendung finden die Photonen des Sonnenlichts bei der Photokatalytischen Wasserspaltung. Die Photonen erzeugen dabei Elektron-Loch-Paare, deren Energie direkt genutzt werden kann, um Wasser in seine Bestandteile zu zerlegen.
Neben dem hohen Energieverbrauch und damit einhergehenden hohen Kosten sowie Effizienzbeschränkungen besteht besonders bei der Elektrolyse das Problem der Elektrodenkorrosion und dadurch bedingter Verunreinigungen des behandelten Wassers. Darüber hinaus benötigen die meisten Verfahren zur Wasserspaltung vorgereinigtes Wasser.
Die Abhandlung "Characteristics of atmospheric pressure air discharges with a liquid cathode and a metal anode", P. Bruggeman et al., veröffentlicht am 17. April 2008, 2008 IOP Publishing Ltd, Plasma Sources Science and Technology, Vol. 17, Nummer 2, betrifft die elektrischen und optischen Emissionseigenschaften eines brennenden Plasmas zwischen einer flüssigen Kathode und einer Metallanode. Die Abhandlung "The effect of voltage waveform and tube diameter on transporting cold plasma strings through a flexible dielectric tube", F. Sohbatzadeh, A. V. Omran, veröffentlicht am 21. November 2014, 2014 AIP Publishing LLC, Physics of Plasmas, Vol. 21, 113510 (2014) betrifft den Transport von Atmosphärendruck-Kaltplasma unter Verwendung einer Einzelelektrodenkonfiguration durch ein sub-millimeter flexibles dielektrisches Rohr über 100 cm hinaus. US2009/109141 offenbart eine Vorrichtung zur Zersetzung von Wasser.
Gemäß einem ersten Aspekt betrifft die Erfindung ein Verfahren zur plasmainduzierten Spaltung von Wasser umfassend die Schritte:
- Bereitstellen von Wasser mit einer vorbestimmten Füllhöhe in einem ungeerdeten Wasserreservoir innerhalb eines Reaktionsraumes;
- Beaufschlagen genau einer in einem vorbestimmten Abstand über der Füllhöhe des Wasserreservoirs angeordneten flächig ausgebildeten, gekühlten Plasmaelektrode mit einer hochfrequenten Wechselspannung bei Atmosphärendruck, derart, dass sich im Hochfrequenzfeld zwischen der Plasmaelektrode und einer Oberfläche des Wassers ein Plasma ausbildet, in dem Wasser zu Wasserstoff und Sauerstoff dissoziiert;
- Sammeln des Wasserstoffs und des Sauerstoffs in einer gemeinsamen Abgasleitung des Reaktionsraumes.

Der Erfindung liegt die Erkenntnis zu Grunde, dass über die Ausbildung eines Plasmas zwischen Plasmaelektrode und Wasserreservoir der direkte Kontakt zwischen Elektrode und Wasser und damit Kontaminationen sowie Elektrodenkorrosion vermieden werden können. Die Erfindung nutzt eine sogenannte Plasma-Elektrolyse, also ein nicht-thermisches Plasma, das Elektronenstoß-induzierte Prozesse initiiert. Dies ermöglicht dissoziative Elektronenanlagerungen und dissoziative Anregungen des Wassers. Die Wasserdissoziation erfolgt gemäß der Erfindung nicht wie bei den anderen Verfahren an zwei Elektroden und/oder einer Membranfläche, sondern in einem plasmachemischen Gas- und Wasservolumenprozess, hierdurch ergeben sich wesentlich höhere Wirkungsgrade als bei herkömmlichen Verfahren zur Wasserstoffgewinnung. Die Entladungen in diesem Gas- und Wasservolumen sowie an der Wasseroberfläche führen zur Erzeugung von freien Elektronen in einem für die Dissoziation von Wasser günstigen Energiebereich (bis zu 20eV). Durch Stöße mit den Wasser- und Gasmolekülen kommt es zur Bildung zahlreicher angeregter Moleküle- und Atomspezies. Über eine Zweistoßreaktion und eine extreme Ladungsverschiebung zwischen Elektrode und dem Wasser erfolgt die Dissoziation in Wasserstoff und Sauerstoff.

Die Erfindung schließt weiter die Erkenntnis ein, dass über die Verwendung hochfrequenter Wechselspannung mit nur einer Plasmaelektrode, Plasmen bei Atmosphärendruck gezündet und insbesondere flächige Plasmen bei Atmosphärendruck betrieben werden können, was mit Gleichspannung nicht möglich ist. Ein Betrieb bei Atmosphärendruck senkt die Kosten für Anlagen und Betrieb deutlich. Das Plasma bildet sich zwischen der Wasseroberfläche des Wassers im Reservoir und der Plasmaelektrode flächig aus.

Unter genau einer flächig ausgebildeten Plasmaelektrode wird im Rahmen dieser Anmeldung neben der bevorzugten Variante einer einstückig ausgebildeten Plasmaelektrode auch eine Plasmaelektrodenanordnung aus mehreren nebeneinander angeordneten Einzelelektroden im vorbestimmten Abstand über dem Wasserreservoir verstanden, die die genau eine Plasmaelektrode bilden.

Bei aus dem Stand der Technik, wie beispielsweise der DE 10 2011 081 915 A1, bekannten Verfahren der Plasmaelektrolyse, die zwei Elektroden nutzen, bilden sich bei Atmosphärendruck hingegen nur punktuelle Entladungen zwischen den Elektroden. Ein weiterer Vorteil der im Rahmen der Erfindung entstehenden Hochfrequenz-Entladungen gegenüber mit Gleichspannung betriebenen Entladungsformen besteht darin, dass die Elektroden aufgrund der in Hochfrequenz-Plasmen auftretenden Verschiebungsströme keinen direkten Kontakt zum Plasma aufweisen müssen. So wird der Eintrag von Verunreinigungen durch das Elektrodenmaterial in das Plasma unterbunden und gleichzeitig eine längere Lebensdauer der Elektrodensysteme selbst sichergestellt. Die Erfindung erlaubt darüber hinaus auch die Verwendung verschiedenster Wasserarten wie Brauch-, Leitungs- oder Meerwasser oder demineralisiertes Wasser, die Verwendung von vorgereinigtem Wasser ist nicht notwendig, so dass teure Vorreinigungsprozesse ebenfalls entfallen.

Es hat sich im Rahmen der Erfindung gezeigt, dass bedingt durch den Dissoziationsprozess im Plasma Wasserstoff und Sauerstoff nicht örtlich getrennt auftreten, sondern sich als Gas mit im Plasma entstehenden Wasserdampf und Wassernebel zu einem Gasgemisch vermischen. Der Plasmaprozess führt zur Inertisierung des Wasserstoff-/Sauerstoff-Gasgemischs, d.h. das Gemisch ist schwer entzündbar. Im Reaktionsraum kommt es bei der Dissoziation nicht zur Rekombination der beiden Gase. Damit können Wasserstoff und Sauerstoff über eine gemeinsame Abgasleitung geführt und durch Membranen separiert werden.

Mit dem erfindungsgemäßen Verfahren können daher effizient größere Mengen an Wasserstoff bei geringeren Kosten erzeugt werden.

Nachfolgend werden vorteilhafte Ausführungsformen des erfindungsgemäßen Verfahrens beschrieben. Die zusätzlichen Merkmale der Ausführungsbeispiele können zur Bildung weiterer Ausführungsformen miteinander kombiniert werden, es sei denn, sie sind in der Beschreibung ausdrücklich als Alternativen zueinander beschrieben.

Vorteilhaft wird zum Beaufschlagen der Plasmaelektrode mit der hochfrequenten Wechselspannung ein Hochfrequenzgenerator mit vorbestimmter Ausgangsimpedanz eingesetzt, der mit der Plasmaelektrode über ein Anpassungsnetzwerk zur Impedanzanpassung einer Impedanz des Plasmas und der Ausgangsimpedanz des Hochfrequenzgenerators verbunden ist. Ein Plasma besitzt eine von zahlreichen äußeren Parametern (z.B. vom ablaufenden plasmachemischen Prozess) abhängige, zeitlich variable und daher von der Ausgangsimpedanz des Generators in der Regel verschiedene komplexe Impedanz. Die Impedanz des Plasmas ist insbesondere abhängig vom Abstand der Plasmaelektrode zur Wasseroberfläche, Wasserzusammensetzung, Temperatur im Reaktionsraum sowie der Atmosphäre im Reaktionsraum. Vorteilhaft wird daher ein sogenanntes Anpassungsnetzwerk (auch Matching Network oder Matchbox) als Bindeglied zwischen Hochfrequenzgenerator und Gasentladung eingesetzt, das die ohmschen und kapazitiven Anteile des Plasmas mit der vom Generator vorgegebenen Impedanz in Übereinstimmung bringt, also die veränderliche Last des Plasmas an den Innenwiderstand des Generators anpasst und somit eine Reflexion von Energie aus dem System minimiert.

Bevorzugt wird ein Hochfrequenzgenerator eingesetzt, dessen Ausgangsimpedanz 50 Ohm beträgt. Es hat sich bei Laborversuchen gezeigt, dass bei dieser Ausgangsimpedanz besonders zuverlässig ein Plasma bei gleichzeitig guter Ausbeute an Wasserstoff und Sauerstoff ausgebildet wird.

Bevorzugt weist die hochfrequente Wechselspannung eine Frequenz im Bereich von 1 bis 40 MHz, insbesondere im Bereich von 10 bis 20 MHz, auf und/oder die Plasmaelektrode wird mit einer Leistung im Bereich von 100 W bis 2 kW, bevorzugt im Bereich von 1 bis 2 kW beaufschlagt. In diesen Bereichen liefert das Verfahren hohe Ausbeute an Wasserstoff bei optimiertem Energieeintrag.

In einer vorteilhaften Ausführungsform wird dem Wasserreservoir kontinuierlich Wasser über eine Einleitung von Wasserdampf oder verdüstem Wasser, anders ausgedrückt Wassernebel, in den Reaktionsraum zugeführt. Über diese Art der Zuführung kann zum einen bei der Dissoziationsreaktion verbrauchtes Wasser nachgeführt werden und so der Abstand zwischen Wasseroberfläche und Plasmaelektrode annähernd konstant gehalten werden, zum anderen wird über die Anwesenheit von zusätzlichem Wasserdampf oder Wassernebel die Dissoziationsreaktion im Plasma weiter gefördert und der Wirkungsgrad des Verfahrens erhöht. Darüber hinaus kann so Wasser zugeführt werden ohne makroskopische Bewegungen wie Verwirbelungen im Wasserreservoir hervorzubringen. Das Wasserreservoir beinhaltet also ruhendes Wasser, was für die Ausbildung und Aufrechterhaltung des Plasmas vorteilhaft ist.

In einer vorteilhaften Ausführung ist die Plasmaelektrode mit einem Dielektrikum beschichtet und das Plasma wird als Barrierenentladung ausgebildet. Dielektrisch behinderte Entladungen, auch Barrierenentladungen (dielectric barrier discharges, DBDS) genannt, entstehen, wenn zwei Elektroden, im vorliegenden Fall die Plasmaelektrode und das Wasser, das selbst eine bestimmte Impedanz aufweist, aber nicht über eine Elektrode oder eine Erdung verfügt durch mindestens einen Isolator, beispielsweise ein Dielektrikum voneinander trennt. Vorteilhaft ist es bei Einsatz eines solchen Isolators weiterhin, wenn das erfindungsgemäße Verfahren mit Wechselspannungen mit einer Leistung im Bereich von 100 W bis 2 kW, bevorzugt im Bereich von 1 bis 2 kW im Bereich von 1 bis 40 MHz, insbesondere im Bereich von 10 bis 20 MHz, durchgeführt wird. Die Barrierenentladung besteht in der Regel aus kurzlebigen filamentären Mikroentladungen bei geringem Entladungsstrom. Sie begrenzt die durch die Entladung transportierte elektrische Aufladung, d.h. sie begrenzt den Stromfluss im System und verteilt die Entladung über die Elektrodenfläche. Die Wasserstoffausbeute kann über eine Maximierung der Fläche an Mikroentladungen bei bestimmter Frequenz, Temperatur und Impedanz positiv beeinflusst werden. Durch das Dielektrikum auf der Plasmaelektrode wird das Rekombinieren der Ladungsträger mit der Elektrode verhindert und die Dissoziationseffizienz erhöht.

Vorteilhaft ist zur Erreichung möglichst großer Wasserstoffmengen daher ein Flächenmaß der Plasmaelektrode zwischen 15 cm² und 450 cm².

In einer Ausführungsform wird im Rahmen eines Startprozesses, also beim Zünden des Plasmas, als Atmosphäre im Reaktionsraum Luft, Ar, He oder Ne eingesetzt. Vorteilhaft wird als Atmosphäre im Reaktionsraum während der Dissoziationsreaktion CO₂ oder N₂ eingesetzt. Diese Atmosphäre ermöglichen die Synthetisierung weiterer Verbindungen, die als Energieträger oder Grundstoff nachfolgend genutzt werden können, wie Methan, CH₄. Bei der plasmachemischen Synthetisierung wird über die Einleitung von Kohlenstoffdioxid in den Reaktionsraum dieses als Reaktionspartner zur Verfügung gestellt und es entsteht neben Wasserstoff und Sauerstoff als Dissoziationsprodukten auch Methan.

Bevorzugt weist das Wasser im Wasserreservoir eine Temperatur im Bereich von 3 bis 99°C auf, in diesem Temperaturbereich ist das Wasser flüssig. Weiter bevorzugt ist ein Bereich von 10 bis 90°C, in diesem sind die Wirkungsgrade besonders hoch.

Vorteilhaft umfasst das Verfahren weiterhin den Schritt:
- Trennen von Wasserstoff und Sauerstoff

Das Trennen kann über eine Membran, beispielsweise eine Polymermembran, oder ein selektives Adsorptionsverfahren erfolgen.

Über die Trennung von Wasserstoff und Sauerstoff können die Gase getrennt gesammelt und gespeichert werden.

Bei einem selektiven Adsorptionsverfahren wird das Wasserstoff-Sauerstoff-Gemisch über ein Reservoir geleitet, in dem sich mindestens ein Adsorber befindet, an diesem wird bevorzugt der Sauerstoff über Adsorption gebunden. Der Wasserstoff wird somit zunächst alleine freigesetzt. Der adsorbierte Sauerstoff kann dann in einem weiteren Schritt vom Adsorber gelöst werden, beispielsweise über eine Druckbeaufschlagung oder ein thermisches Lösen.

Als Adsorber werden bevorzugt keramische Werkstoffe mit großer Oberfläche und hoher Adsorptionskapazität für Sauerstoff verwendet, insbesondere sogenannte Molekularsiebe. Neben Zeolithen, also kristallinen Alumosilikaten können dies auch Kohlenstoffmolekularsiebe sein. Bevorzugt können Kieselgel (Silica-Gel) oder aktiviertes Aluminiumoxid eingesetzt werden.

Gemäß einem zweiten Aspekt betrifft die Erfindung eine Vorrichtung zur plasmainduzierten Spaltung von Wasser umfassend

in einem Reaktionsraum
- ein ungeerdetes nach oben offenes Wasserreservoir;
- genau eine flächig ausgebildete, gekühlte Plasmaelektrode, die in einem vorbestimmten Abstand über einer Füllhöhe des Wasserreservoirs angeordnet ist, wobei am Reaktionsraum eine gemeinsame Abgasleitung für Wasserstoff und Sauerstoff angeordnet ist, und außerhalb des Reaktionsraumes
- einen Hochfrequenzgenerator, der mit der Plasmaelektrode über ein Anpassungsnetzwerk zur Impedanzanpassung einer Impedanz eines an der Plasmaelektrode entstehenden Plasmas und einer Ausgangsimpedanz des Hochfrequenzgenerators verbunden ist.

Vorteilhaft wird ein sogenanntes Anpassungsnetzwerk (auch Matching Network oder Matchbox) als Bindeglied zwischen Hochfrequenzgenerator und Plasma eingesetzt, das die ohmschen und kapazitiven Anteile des Plasmas mit einer vom Generator vorgegebenen Ausgangsimpedanz in Übereinstimmung bringt. Die Impedanz des Plasmas ist insbesondere abhängig vom Abstand der Plasmaelektrode zur Wasseroberfläche, Wasserzusammensetzung, der Beschaffenheit eines Gehäuses um den Reaktionsraum, Temperatur im Reaktionsraum sowie der Atmosphäre im Reaktionsraum.

Die Vorrichtung teilt im Übrigen die Vorteile des Verfahrens gemäß dem ersten Aspekt der Erfindung.

Bevorzugt beträgt die Ausgangsimpedanz des Hochfrequenzgenerators 50 Ohm und/oder eine Ausgangsleistung des Hochfrequenzgenerators zwischen 100 W und 2 kW. Es hat sich gezeigt, dass insbesondere bei dieser Ausgangsimpedanz besonders zuverlässig ein Plasma bei gleichzeitig guter Ausbeute an Wasserstoff und Sauerstoff ausgebildet wird.

Vorteilhaft umfasst das Anpassungsnetzwerk mindestens einen motorgesteuerten Kondensator und mindestens eine variable Spule. Diese bilden zusammen einen elektrischen Schwingkreis, über den die Impedanzanpassung kontinuierlich auch auf schwankende Lasten durch das Plasma reagieren kann. Die Abstimmung der Kondensatoren und Spulen erfolgt in einer weiteren Ausführungsform automatisch über eine Reflexion- und Stehwellenregelkreismethode.

Bevorzugt weist der Reaktionsraum eine Zuführung für Wasserdampf und/oder verdüstes Wasser zur kontinuierlichen Wasserzuführung in das Wasserreservoir aufweist. Hierüber kann zum einen bei der Dissoziationsreaktion verbrauchtes Wasser nachgeführt werden und so der Abstand zwischen Wasseroberfläche und Plasmaelektrode annähernd konstant gehalten werden, ohne eine Nachführung der Plasmaelektrode, zum anderen wird über die Anwesenheit von zusätzlichem Wasserdampf oder Wassernebel die Dissoziationsreaktion im Plasma weiter gefördert und der Wirkungsgrad des Verfahrens erhöht.

Bevorzugt liegt der vorbestimmte Abstand zwischen Plasmaelektrode und Füllhöhe des Wasserreservoirs in einem Bereich von 0,2 bis 2 cm, bevorzugt im Bereich von 0,2 bis 1 cm.

Bevorzugt weist die Vorrichtung mindestens eine Zuführung für mindestens ein Gas in den Reaktionsraum, insbesondere für Luft, Ar, He, Ne, N₂ und/oder CO₂, auf.

In einer vorteilhaften Ausführungsform ist in der gemeinsamen Abgasleitung oder an einem Ende der gemeinsamen Abgasleitung eine Membran zur Trennung von Wasserstoff und Sauerstoff angeordnet. In einer Weiterbildung ist die gemeinsame Abgasleitung weiterhin ausgebildet, auch Methan zusammen mit Wasserstoff und Sauerstoff zu führen. Bevorzugt ist dann in der gemeinsamen Abgasleitung oder an einem Ende der gemeinsamen Abgasleitung zusätzlich mindestens eine weitere Membran zur Abtrennung von Methan und Sauerstoff angeordnet.

Bevorzugt ist die Membran zu Trennung von Wasserstoff und Sauerstoff eine Polymermembran.

In einer alternativen Ausführungsform ist in der gemeinsamen Abgasleitung oder an einem Ende der gemeinsamen Abgasleitung ein Reservoir angeordnet, in dem sich mindestens ein Adsorber befindet, beispielsweise in Form einer Schüttung oder eines offenporigen Schaumes. Der Adsorber ist vorteilhaft derart ausgebildet, dass Sauerstoff an ihm bevorzugt über Adsorption gebunden wird. Der Wasserstoff wird somit zunächst alleine freigesetzt.

In einer Weiterbildung ist am Reservoir eine Vorrichtung zum Lösen des adsorbierten Sauerstoffs vorhanden. Diese kann beispielsweise in Form einer Heizung zum thermischen Lösen des Sauerstoffs oder in Form einer Vakuumpumpe zur Beaufschlagung mit Unterdruck ausgebildet sein. Das Reservoir kann aber auch eine verschließbare Öffnung aufweisen, über die der beladene Absorber nach der Adsorption gegen einen unbeladenen ausgetauscht werden kann.

Als Adsorber werden bevorzugt keramische Werkstoffe mit großer Oberfläche und hoher Adsorptionskapazität für Sauerstoff verwendet, insbesondere sogenannte Molekularsiebe. Neben Zeolithen, also kristallinen Alumosilikaten können dies auch Kohlenstoffmolekularsiebe sein. Bevorzugt können Kieselgel (Silica-Gel) oder aktiviertes Aluminiumoxid eingesetzt werden. In einer Ausführungsform weist die Plasmaelektrode ein Metall, insbesondere Aluminium, auf, dieses wird auf Grund der guten Leitfähigkeit bei relativ geringen Kosten bevorzugt. Vorteilhaft ist die Plasmaelektrode mit einem Dielektrikum, insbesondere mit Aluminiumoxid, beschichtet. Dies erlaubt die Ausbildung des Plasmas über eine Barrierenentladung. Bevorzugt weist das Dielektrikum eine Schichtdicke von 200 bis 1000 µm auf.

Ausführungsbeispiele sind auch den Ansprüchen zu entnehmen.

Nachfolgend werden weitere Ausführungsbeispiele der Vorrichtung und des Verfahrens anhand der Zeichnungen beschrieben. Es zeigen:
Fig. 1 Eine schematische Darstellung eines Ausführungsbeispiels einer Vorrichtung zur plasmainduzierten Spaltung von Wasser gemäß dem zweiten Aspekt der Erfindung;
Fig.2 Eine schematische Darstellung eines weiteren Ausführungsbeispiels einer Vorrichtung zur plasmainduzierten Spaltung von Wasser gemäß dem zweiten Aspekt der Erfindung.

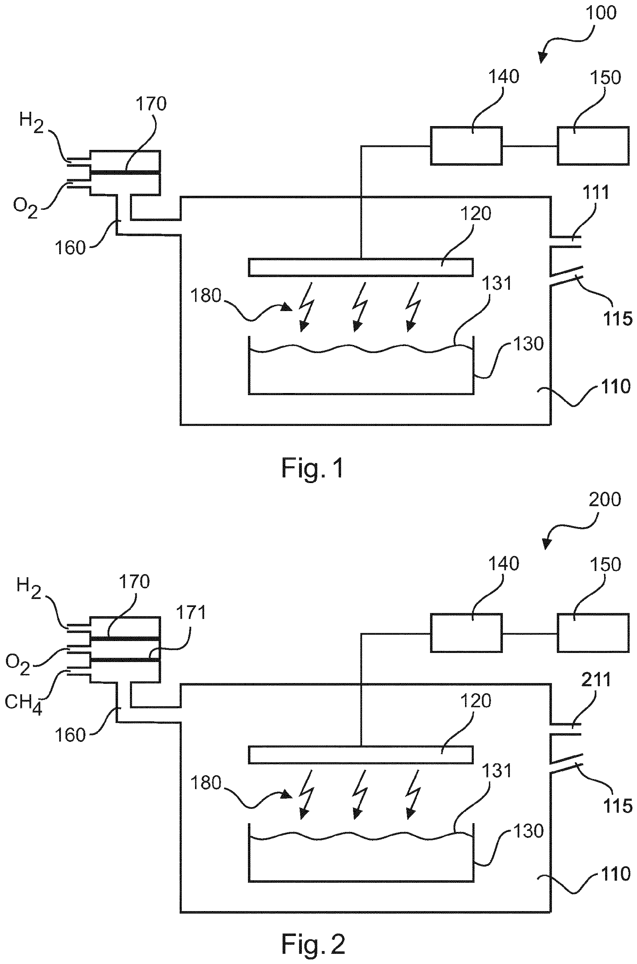

Fig.1 zeigt eine Ausführungsform einer Vorrichtung 100 zur plasmainduzierten Spaltung von Wasser umfassend in einem Reaktionsraum 110 ein ungeerdetes nach oben offenes Wasserreservoir 130 sowie genau eine flächig ausgebildete, gekühlte Plasmaelektrode 120, die in einem vorbestimmten Abstand, im gezeigten Ausführungsbeispiel 1 cm, über einer Füllhöhe 131 des Wasserreservoirs 130 angeordnet ist. Am Reaktionsraum 110 ist eine gemeinsame Abgasleitung 160 für Wasserstoff und Sauerstoff angeordnet. Außerhalb des Reaktionsraumes 110 ist ein Hochfrequenzgenerator 150 angeordnet, der mit der Plasmaelektrode 120 über ein Anpassungsnetzwerk 140 zur Impedanzanpassung einer Impedanz eines an der Plasmaelektrode 120 entstehenden Plasmas 180 und einer Ausgangsimpedanz des Hochfrequenzgenerators verbunden ist. Das Anpassungsnetzwerk 140 umfasst in der gezeigten Ausführungsform einen motorgesteuerten Kondensator und eine variable Spule als elektrischen Schwingkreis. Das Anpassungsnetzwerk ist ausgebildet, die Impedanz des Plasmas, welche im Prozess über Ihre Abhängigkeit von insbesondere einem Abstand der Plasmaelektrode 120 zur Wasseroberfläche, einer Wasserzusammensetzung, einer Temperatur im Reaktionsraum sowie einer Atmosphäre im Reaktionsraum, und die Ausgangsimpedanz des Hochfrequenzgenerators 150 anzupassen. Die Ausgangsimpedanz des Hochfrequenzgenerators 150 beträgt vorteilhaft 50 Ohm. Im Reaktionsraum herrscht wie auch in der Umgebung Atmosphärendruck. Die Ausbildung eines flächigen Plasmas zwischen der Plasmaelektrode 120 und der Oberfläche des Wassers im Wasserreservoir 130 unter Atmosphärendruck ist hier möglich, weil nur genau eine Elektrode, nämlich die Plasmaelektrode 120 genutzt wird und als Gegenstück das Wasser selbst genutzt wird. Zur Erzeugung des Plasmas 180 wird die Plasmaelektrode 120 mit einer hochfrequenten Wechselspannung beaufschlagt, die der Hochfrequenzgenerator 150 bereitstellt. Diese hochfrequente Wechselspannung weist in der gezeigten Ausführungsform eine Frequenz im Bereich von 10 bis 20 MHz auf. Die Plasmaelektrode wird dabei mit einer Leistung von 1 bis 2 kW beaufschlagt. Die Wasserdissoziation erfolgt in einem plasmachemischen Gas- und Wasservolumenprozess, hierdurch ergeben sich wesentlich höhere Wirkungsgrade als bei herkömmlichen Verfahren zur Wasserstoffgewinnung. Die Entladungen in diesem Gas- und Wasservolumen sowie an der Wasseroberfläche führen zur Erzeugung von freien Elektronen in einem für die Dissoziation von Wasser günstigen Energiebereich. Durch Stöße mit den Wasser- und Gasmolekülen kommt es zur Bildung zahlreicher angeregter Moleküle- und Atomspezies. Über eine Zweistoßreaktion und eine extreme Ladungsverschiebung zwischen Elektrode und dem Wasser erfolgt die Dissoziation in Wasserstoff und Sauerstoff. Das Plasma wirkt mit seinem Elektronenüberschuss dabei als "Reduktionsmittel" auf das Wasser.

Die Plasmaelektrode 120 weist im gezeigten Ausführungsbeispiel einen metallischen Grundkörper, hier aus Aluminium, auf, der mit einem Dielektrikum, hier Aluminiumoxid beschichtet ist. Das flächige Plasma 180 wird daher über eine Barrierenentladung ausgebildet.

In der gemeinsamen Abgasleitung 160 für Wasserstoff und Sauerstoff ist eine Membran 170 zur Trennung beider Gase angeordnet. Diese können dann im Anschluss getrennt voneinander gesammelt und gelagert werden.

Weiter ist in der gezeigten Ausführungsform eine Zuführung 115 für Wasserdampf und/oder verdüstes Wasser zur kontinuierlichen Wasserzuführung in das Wasserreservoir vorhanden. Über dieser Zuführung kann Wasserdampf oder verdüstes Wasser, also Wassernebel in den Reaktionsraum 110 geleitet werden, darüber wird zum einen das Wasserreservoir 130 aufgefüllt, um möglichst konstant die Füllhöhe 131 zu erreichen und zum anderen fördert die Wasserzuführung über Dampf oder Nebel die Dissoziationsreaktion im Plasma und damit den Wirkungsgrad des Verfahrens.

Zusätzlich ist am Reaktionsraum 110 eine Zuführung 111 für mindestens ein Gas in den Reaktionsraum, hierfür Luft, Ar, He und/oder Ne angeordnet. Diese Gase werden insbesondere als Atmosphäre im Reaktionsraum während eines Startprozesses, also beim Zünden des Plasmas 180 eingesetzt.

Fig. 2 zeigt ein weiteres Ausführungsbeispiel einer Vorrichtung 200 zur plasmainduzierten Spaltung von Wasser gemäß dem zweiten Aspekt der Erfindung. Die Vorrichtung 200 entspricht zu großen Teilen der Vorrichtung 100 aus Fig. 1, weshalb nachfolgend nur die Unterschiede beschrieben werden, im Übrigen wird auf die Beschreibung zu Fig. 1 verwiesen. Die Vorrichtung 200 weist eine Zuführung 211 für Kohlenstoffdioxid CO₂ auf. Über die Einleitung von Kohlenstoffdioxid in den Reaktionsraum wird dieses als Reaktionspartner für Wasserstoff zur Verfügung gestellt und es entsteht neben Wasserstoff und Sauerstoff als Syntheseprodukt auch Methan. Daher ist in der gemeinsamen Abgasleitung 160, die hier auch zum Führen von Methan neben Wasserstoff und Sauerstoff ausgebildet ist, eine zusätzliche Membran 171 angeordnet, über die Methan aus dem Gasgemisch abgetrennt wird, bevor die Trennung von Wasserstoff und Sauerstoff erfolgt.

### Bezuqszeichenliste:

- 100,200: Vorrichtung
- 110: Reaktionsraum
- 111: Zuführung für mindestens ein Gas
- 115: Zuführung für Wasserdampf
- 120: Plasmaelektrode
- 130: Wasserreservoir
- 131: Füllhöhe
- 140: Anpassungsnetzwerk
- 150: Hochfrequenzgerator
- 160: Abgasleitung
- 170: Membran
- 171: zusätzliche Membran
- 180: Plasma
- 211: Zuführung für Kohlenstoffdioxid CO₂

## Patentansprüche

1. Verfahren zur plasmainduzierten Spaltung von Wasser umfassend die Schritte:
- Bereitstellen von Wasser mit einer vorbestimmten Füllhöhe in einem ungeerdeten Wasserreservoir innerhalb eines Reaktionsraumes;
- Beaufschlagen genau einer in einem vorbestimmten Abstand über der Füllhöhe des Wasserreservoirs angeordneten flächig ausgebildeten, gekühlten Plasmaelektrode mit einer hochfrequenten Wechselspannung bei Atmosphärendruck, derart, dass sich im Hochfrequenzfeld zwischen der Plasmaelektrode und einer Oberfläche des Wassers ein Plasma ausbildet, in dem Wasser zu Wasserstoff und Sauerstoff dissoziiert;
- Sammeln des Wasserstoffs und des Sauerstoffs in einer gemeinsamen Abgasleitung des Reaktionsraumes.

2. Verfahren nach Anspruch 1, bei dem zum Beaufschlagen der Plasmaelektrode mit der hochfrequenten Wechselspannung ein Hochfrequenzgenerator mit einer vorbestimmten Ausgangsimpedanz eingesetzt wird, der mit der Plasmaelektrode über ein Anpassungsnetzwerk zur Impedanzanpassung einer Impedanz des Plasmas und der Ausgangsimpedanz des Hochfrequenzgenerators verbunden ist.

3. Verfahren nach einem der vorstehenden Ansprüche, bei dem dem Wasserreservoir kontinuierlich Wasser über eine Einleitung von Wasserdampf oder verdüstem Wasser in den Reaktionsraum zugeführt wird.

4. Verfahren nach einem der vorstehenden Ansprüche, bei dem die Plasmaelektrode mit einem Dielektrikum beschichtet ist und das Plasma als Barrierenentladung ausgebildet wird.

5. Verfahren nach einem der vorstehenden Ansprüche, bei dem als Atmosphäre im Reaktionsraum Luft, Ar, He, oder Ne im Rahmen eines Startprozesses eingesetzt wird.

6. Verfahren nach einem der vorstehenden Ansprüche, bei dem als Atmosphäre im Reaktionsraum während der Dissoziationsreaktion CO₂ oder N₂ eingesetzt wird.

7. Verfahren nach einem der vorstehenden Ansprüche, weiterhin umfassend:
- Trennen von Wasserstoff und Sauerstoff über eine Membran oder ein selektives Adsorptionsverfahren.

8. Vorrichtung zur plasmainduzierten Spaltung von Wasser umfassend:
in einem Reaktionsraum
- ein ungeerdetes nach oben offenes Wasserreservoir;
- genau eine flächig ausgebildete, gekühlte Plasmaelektrode, die in einem vorbestimmten Abstand über einer Füllhöhe des Wasserreservoirs angeordnet ist, wobei am Reaktionsraum eine gemeinsame Abgasleitung für Wasserstoff und Sauerstoff angeordnet ist, und außerhalb des Reaktionsraumes
- einen Hochfrequenzgenerator mit vorbestimmter Ausgangsimpedanz, der mit der Plasmaelektrode über ein Anpassungsnetzwerk zur Impedanzanpassung einer Impedanz eines an der Plasmaelektrode entstehenden Plasmas und der Ausgangsimpedanz des Hochfrequenzgenerators verbunden ist.

9. Vorrichtung nach Anspruch 8, bei der die Ausgangsimpedanz des Hochfrequenzgenerators 50 Ohm beträgt und/oder eine Ausgangsleistung des Hochfrequenzgenerators zwischen 100 W und 2 kW beträgt.

10. Vorrichtung nach Anspruch 8 oder 9, bei der das Anpassungsnetzwerk mindestens einen motorgesteuerten Kondensator und mindestens eine variable Spule umfasst.

11. Vorrichtung nach einem der Ansprüche 8 bis 10, bei der der Reaktionsraum eine Zuführung für Wasserdampf und/oder verdüstes Wasser zur kontinuierlichen Wasserzuführung in das Wasserreservoir aufweist.

12. Vorrichtung nach einem der Ansprüche 8 bis 11, bei der der vorbestimmte Abstand zwischen Plasmaelektrode und Füllhöhe des Wasserreservoirs in einem Bereich von 0,2 bis 2 cm, bevorzugt im Bereich von 0,2 bis 1 cm liegt.

13. Vorrichtung nach einem der Ansprüche 8 bis 12, die mindestens eine Zuführung für mindestens ein Gas in den Reaktionsraum, insbesondere für Luft, Ar, He, Ne, N₂ und/oder CO₂ aufweist.

14. Vorrichtung nach einem der Ansprüche 8 bis 13, bei der in der gemeinsamen Abgasleitung oder an einem Ende der gemeinsamen Abgasleitung eine Membran zur Trennung von Wasserstoff und Sauerstoff oder ein Reservoir mit einem Adsorber angeordnet ist.

15. Vorrichtung nach einem der Ansprüche 8 bis 14, bei der die Plasmaelektrode mit einem Dielektrikum, insbesondere mit Aluminiumoxid beschichtet ist.

## Claims

1. Method for plasma-induced splitting of water comprising the steps:
- providing water with a predetermined filling level in an unearthed water reservoir within a reaction chamber;
- applying a high-frequency alternating voltage at atmospheric pressure to precisely one cooled plasma electrode having a planar form and arranged at a predetermined distance above the filling level of the water reservoir, in such a way that, in the high-frequency field between the plasma electrode and a surface of the water, a plasma is formed, in which water dissociates into hydrogen and oxygen;
- collecting the hydrogen and oxygen in a common exhaust gas line of the reaction chamber.

2. Method according to claim 1, in which a high-frequency generator, with a predetermined output impedance and connected to the plasma electrode via a matching network for impedance-matching of an impedance of the plasma and the output impedance of the high-frequency generator, is used to apply the high-frequency alternating voltage to the plasma electrode.

3. Method according to any one of the preceding claims, in which water is continuously supplied to the water reservoir via introduction of water vapour or atomised water into the reaction chamber.

4. Method according to any one of the preceding claims, in which the plasma electrode is coated with a dielectric and the plasma is formed as a barrier discharge.

5. Method according to any one of the preceding claims, wherein air, Ar, He, or Ne is used as atmosphere in the reaction chamber as part of a starting process.

6. Method according to any one of the preceding claims, wherein CO₂ or N₂ is used as atmosphere in the reaction chamber during the dissociation reaction.

7. Method according to any one of the preceding claims, further comprising:
- separating hydrogen and oxygen via a membrane or a selective adsorption process.

8. Device for plasma-induced splitting of water comprising:
in a reaction chamber
- an unearthed upwardly-open water reservoir;
- precisely one cooled plasma electrode having a planar form which is arranged at a predetermined distance above a filling level of the water reservoir, wherein a common exhaust gas line for hydrogen and oxygen is arranged at the reaction chamber, and outside the reaction chamber
- a high-frequency generator having a predetermined output impedance and being connected to the plasma electrode via a matching network for impedance-matching of an impedance of a plasma generated at the plasma electrode and the output impedance of the high-frequency generator.

9. Device according to claim 8, in which the output impedance of the high-frequency generator is 50 Ohms and/or an output power of the high-frequency generator is between 100 W and 2 kW.

10. Device according to claim 8 or 9, in which the matching network comprises at least one motor-controlled capacitor and at least one variable coil.

11. Device according to any one of claims 8 to 10, in which the reaction chamber comprises a water vapour and/or atomised water feed for continuously feeding water into the water reservoir.

12. Device according to any one of claims 8 to 11, in which the predetermined distance between plasma electrode and filling level of the water reservoir is in a range from 0.2 to 2 cm, preferably in a range from 0.2 to 1 cm.

13. Device according to any one of claims 8 to 12, which has at least one feed for at least one gas into the reaction chamber, in particular for air, Ar, He, Ne, N₂ and/or CO₂.

14. Device according to any one of claims 8 to 13, in which a membrane for separating hydrogen and oxygen or a reservoir with an adsorber is arranged in the common exhaust gas line or at one end of the common exhaust gas line.

15. Device according to any one of claims 8 to 14, in which the plasma electrode is coated with a dielectric, in particular with aluminium oxide.

## Revendications

1. Procédé de dissociation de l'eau induite par plasma comprenant les étapes consistant en :
- la fourniture d'eau dans un réservoir d'eau non mis à la terre jusqu'à un niveau de remplissage prédéterminé au sein d'un espace réactionnel ;
- l'application sur précisément une électrode à plasma refroidie, plane, disposée à une distance prédéterminée au-dessus du niveau de remplissage du réservoir d'eau d'une tension alternative haute fréquence sous pression atmosphérique, de telle sorte qu'un plasma se forme dans le champ haute fréquence entre l'électrode à plasma et la surface de l'eau, de sorte que l'eau se dissocie en hydrogène et oxygène ;
- la collecte de l'hydrogène et de l'oxygène dans une conduite d'évacuation commune de l'espace réactionnel.

2. Procédé selon la revendication 1, dans lequel pour l'application d'une tension alternative haute fréquence à l'électrode à plasma on utilise un générateur de haute fréquence ayant une impédance de sortie prédéterminée, connecté à l'électrode à plasma par l'intermédiaire d'un réseau d'adaptation pour adapter l'impédance du plasma et l'impédance de sortie du générateur haute fréquence.

3. Procédé selon l'une quelconque des revendications précédentes, dans lequel de l'eau est amenée en continu au réservoir d'eau par l'intermédiaire d'une introduction de vapeur d'eau ou d'eau atomisée dans l'espace réactionnel.

4. Procédé selon l'une quelconque des revendications précédentes, dans lequel l'électrode à plasma est revêtue d'un diélectrique et le plasma est formé en tant que décharge de barrière.

5. Procédé selon l'une des revendications précédentes, dans lequel on utilise comme atmosphère dans l'espace réactionnel de l'air, Ar, He ou Ne dans le cadre d'un processus de démarrage.

6. Procédé selon l'une quelconque des revendications précédentes, dans lequel en tant qu'atmosphère dans l'espace réactionnel lors de la réaction de dissociation est utilisé CO₂ ou N₂.

7. Procédé selon l'une quelconque des revendications précédentes, comprenant en outre
- la séparation de l'hydrogène et de l'oxygène via une membrane ou un procédé d'adsorption sélective.

8. Dispositif de dissociation de l'eau induite par plasma comprenant :
dans un espace réactionnel
- un réservoir d'eau non mis à la terre ouvert vers le haut ;
- précisément une électrode à plasma plane et refroidie disposée à une distance prédéterminée au-dessus du niveau de remplissage du réservoir d'eau, une conduite de gaz d'évacuation commune pour l'hydrogène et l'oxygène étant disposée dans l'espace réactionnel
à l'extérieur de l'espace réactionnel,
- un générateur haute fréquence présentant une impédance de sortie prédéterminée, relié à l'électrode à plasma par l'intermédiaire d'un réseau d'adaptation aux fins d'adaptation d'impédance entre l'impédance d'un plasma produit par l'électrode à plasma et l'impédance de sortie du générateur haute fréquence.

9. Dispositif selon la revendication 8, dans lequel l'impédance de sortie du générateur haute fréquence est de 50 ohms et/ou une puissance de sortie du générateur haute fréquence est comprise entre 100 W et 2 KW.

10. Dispositif selon la revendication 8 ou 9, dans lequel le réseau d'adaptation comprend au moins un condensateur motorisé et au moins une bobine variable.

11. Dispositif selon l'une des revendications 8 à 10, dans lequel l'espace réactionnel comporte une alimentation en vapeur et/ou en eau atomisée pour produire une alimentation en eau continue dans le réservoir d'eau.

12. Dispositif selon l'une des revendications 8 à 11, dans lequel la distance prédéterminée entre l'électrode à plasma et le niveau de remplissage du réservoir d'eau est comprise entre 0,2 et 2 cm, de préférence entre 0,2 et 1 cm.

13. Dispositif selon l'une des revendications 8 à 12, qui comporte au moins une alimentation dans l'espace réactionnel d'au moins un gaz, notamment air, Ar, He, Ne, N₂ et/ou CO₂.

14. Dispositif selon l'une des revendications 8 à 13, dans lequel une membrane de séparation d'hydrogène et d'oxygène ou un réservoir avec adsorbeur est disposé dans le tuyau d'évacuation commun ou à une extrémité du tuyau d'évacuation commun.

15. Dispositif selon l'une des revendications 8 à 14, dans lequel l'électrode à plasma est revêtue d'un diélectrique, notamment d'oxyde d'aluminium.
